# EUROPEAN PATENT SPECIFICATION

(11) **EP 2 614 874 B1**
(45) Date of publication and mention of the grant of the patent: **01.08.2018**
(21) Application number: 13150463.1
(22) Date of filing: 08.01.2013
(51) Int. Cl.: B01D 46/24, F01N 3/022, F01N 3/035

(54) **Honeycomb filter**
Wabenfilter
Filtre en nids d'abeilles

(30) Priority: 10.01.2012 JP 2012002359
(43) Date of publication of application: 17.07.2013
(73) Proprietor: NGK Insulators, Ltd., Nagoya-city, Aichi 467-8530 (JP)
(72) Inventor: Mizutani, Takashi, Nagoya city, Aichi 467-8530 (JP); Iwasaki, Shingo, Nagoya city, Aichi 467-8530 (JP)
(74) Representative: Naylor, Matthew John

(56) References cited:
- EP-A1- 2 085 131
- EP-A2- 2 105 185
- WO-A1-2011/125773
- JP-A- 2010 214 335

## Description

This application claims the benefit of priority from Japanese patent application number JP-2012-002359(filed on 10 January 2012).

### Technical Field

The present invention relates to a honeycomb filter.

### Background Art

A honeycomb filter has been proposed that is manufactured by joining honeycomb segments together to form an assembly, grinding the periphery of the assembly to form a peripherally processed assembly, forming a trapping layer for trapping solid components (PM) on the partitions of the peripherally processed assembly, drying the trapping layer to form a dried product, applying a coating on the periphery of the dried product, and heating the coating and simultaneously binding the trapping layers to the partitions (see, for example, Patent Literature 1). Simultaneous heat treatment of the peripheral coating and the PM trapping layers can reduce manufacturing costs. Furthermore, the PM trapping layers have sufficiently high strength, the initial PM trapping efficiency is high, an increasing rate of initial pressure loss is low, and PM deposition causes low pressure loss. Furthermore, the honeycomb filter exhibits small hysteresis, can be easily regenerated, and has excellent performance, low manufacturing costs, and high durability.

### Citation List

Japanese Unexamined Patent Application Publication No. 2010-214335

EP 2 085 131 describes a plugged honeycomb structure which has gaps opened on the side of an end face between each plugging portion and partition walls.

EP 2 105 185 describes a honeycomb structure. A plugging portion is formed in the end of each cell, and a gap having a size of 20 µm or more is formed between the plugging portion and each partition wall. Moreover, the length of the gap in the axial direction is 50% or more and less than 95% of the length of the plugging portion in the axial direction, the length of the gap in a face vertical to the axial direction is 20% or more and 50% or less of the length of the inner peripheral surface of the cell, and the gaps are formed in at least 1/3 of the plugging portions.

WO2011/125773 describes a honeycomb structure having a trapping layer on each of the partition walls.

### Disclosure of Invention

In honeycomb filters, a fluid passing through a partition portion has the highest flow rate in a downstream region at the downstream rear end of a flow path. The existence of the highest flow rate in the downstream region may cause significant pressure loss. In particular, PM deposited on a trapping layer can further increase pressure loss. The inflow of an exhaust gas under high load may also cause an increase in pressure loss or a decrease in trapping efficiency. Although the increase in pressure loss and improvement in trapping efficiency in a honeycomb filter have been studied as described in Patent Literature 1, the improvements were not sufficient, and further improvements are desired.

In view of the situations described above, it is a principal object of the present invention to provide a honeycomb filter that has decreased pressure loss and improved trapping of solid components contained in a fluid.

A honeycomb filter according to one aspect of the present invention is a honeycomb filter as set out in claim 1.

The honeycomb filter includes a void between the sealing portion on the outlet side of the cell and the trapping layer. The void can reduce the permeation resistance of the trapping layer at the outlet end and reduce an increase in maximum partition permeate flow rate, which is the maximum flow rate of a fluid passing through the partition portion. This can improve trapping efficiency when no solid components are deposited. The void can also separate a maximum flow rate portion at the outlet end of the trapping layer from a deposition portion on which solid components are deposited. This can reduce an increase in pressure loss when a fluid passes at a high flow rate through the trapping layer on which solid components have been deposited. Thus, the void can reduce pressure loss and improve trapping of solid components contained in a fluid. The void may be formed between the sealing portion on the outlet side of the cell, the trapping layer, and the partition portion.

In a honeycomb filter according to the present invention, the trapping layer has a convex closed end facing the sealing portion on the outlet side of the cell. This can reduce the permeation resistance of the trapping layer and the partition portion at the outlet end.

In some embodiments, the sealing portion on the outlet side of the cell may have a convex end facing the trapping layer. This can reduce the permeation resistance of the trapping layer and the partition portion at the outlet end.

In some embodiments, the void may be larger on the partition portion side than on the center side of the cell. This can reduce the permeation resistance of the trapping layer and the partition portion at the outlet end.

In some embodiments, the void may have a void length L of 0.5 mm or more and 6.0 mm or less as viewed in a cross section in the same direction as the flow path at the outlet end of the cell. The void length L is the length between a contact position between the trapping layer and the partition portion and a contact position between the sealing portion and the partition portion. When the void length L is 0.5 mm or more, the presence of such a large void can reduce the permeation resistance of the trapping layer and the partition portion at the outlet end. When the void length L is 6.0 mm or less, this can reduce the strength reduction of the trapping layer at the outlet end.

In some embodiments, the trapping layer may have a higher thickness at the center of the cell at the outlet end of the cell. This is preferred because a fluid can easily pass through the trapping layer, the void, and the partition portion at the outlet end.

In some embodiments, the trapping layer may have a center thickness A of 4 mm or more and 30 mm or less as viewed in a cross section in the same direction as the flow path at the center of the cell at the outlet end of the cell. When the center thickness A is 4 mm or more, this can improve trapping of solid components when a fluid passes at a high flow rate through the trapping layer. When the center thickness A is 30 mm or less, this can reduce an increase in the pressure loss of the trapping layer on which solid components have been trapped.

In some embodiments, the ratio A/B of a center thickness A to a 1/4-distance thickness B may be 1.1 or more and 1.8 or less, wherein the center thickness A is the thickness of the trapping layer as viewed in a cross section in the same direction as the flow path at the center of the cell at the outlet end of the cell, and the 1/4-distance thickness B is the thickness of the trapping layer at a position spaced away from a surface of the partition portion by one fourth of the distance between the surface of the partition portion and a surface of an opposing partition portion. When the ratio A/B is 1.1 or more, this can improve trapping of solid components when a fluid passes at a high flow rate through the trapping layer. When the ratio A/B is 1.8 or less, this can reduce an increase in pressure loss when a fluid passes at a high flow rate through the trapping layer.

In some embodiments, a portion of the trapping layer disposed on the partition in a downstream region of the cell may have a thickness t of 0.3 mm or more and 1.0 mm or less. When the thickness t is 0.3 mm or more, this can improve trapping of solid components and reduce an increase in pressure loss when a fluid passes at a high flow rate through the trapping layer. When the thickness t is 1.0 mm or less, this can reduce an increase in the pressure loss of the trapping layer on which solid components have been trapped.

A honeycomb filter according to the present invention may contain a catalyst. The catalyst can facilitate the removal of trapped solid components by combustion.

### Brief Description of Drawings

Fig. 1 is a schematic explanatory view of an example of the structure of a honeycomb filter 20.
Fig. 2 is an explanatory view of a method for calculating the thickness t, the center thickness A, the 1/4-distance thickness B, and the void length L.
Fig. 3 is a schematic explanatory view of the flow of an exhaust gas at the outlet end of a cell 23.
Fig. 4 is a schematic explanatory view of the structure of a honeycomb filter 40.
Fig. 5 is cross-sectional photographs of cells in the flow direction in Experimental Example 1.
Fig. 6 is cross-sectional photographs of cells in the flow direction in Experimental Example 4.
Fig. 7 is a graph showing the measurement results of pressure loss and trapping efficiency at a high rotational speed under high load as a function of void length L.
Fig. 8 is a graph showing the measurement results of pressure loss at a high rotational speed under high load and pressure loss in the presence of ash as a function of center thickness A.
Fig. 9 is a graph showing the measurement results of pressure loss and trapping efficiency at a high rotational speed under high load as a function of ratio A/B.
Fig. 10 is a graph showing the measurement results of pressure loss at a high rotational speed under high load and pressure loss in the presence of ash as a function of thickness t.

### Description of Preferred Embodiments

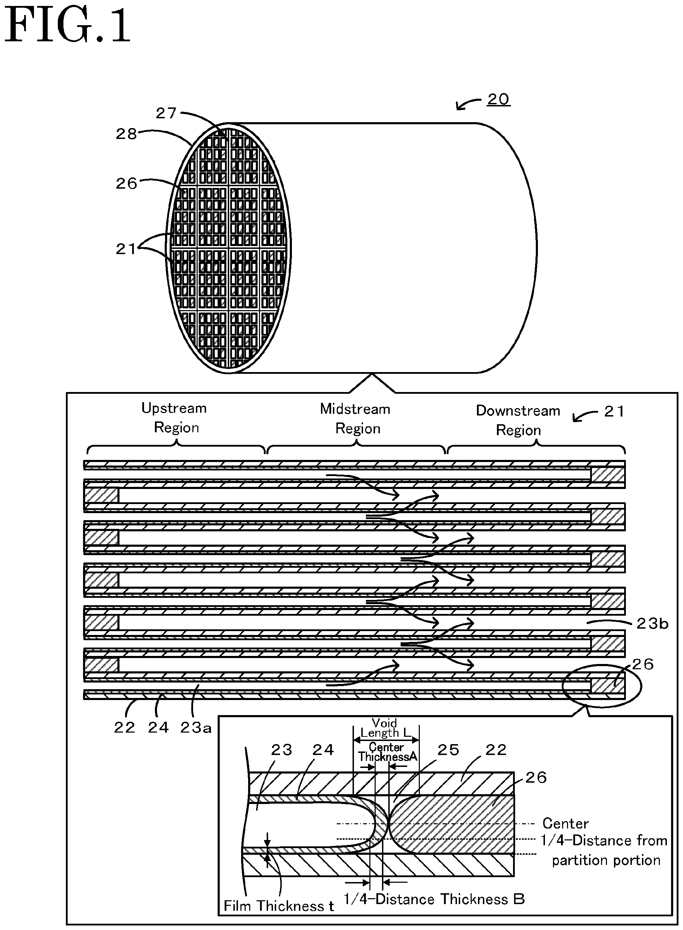

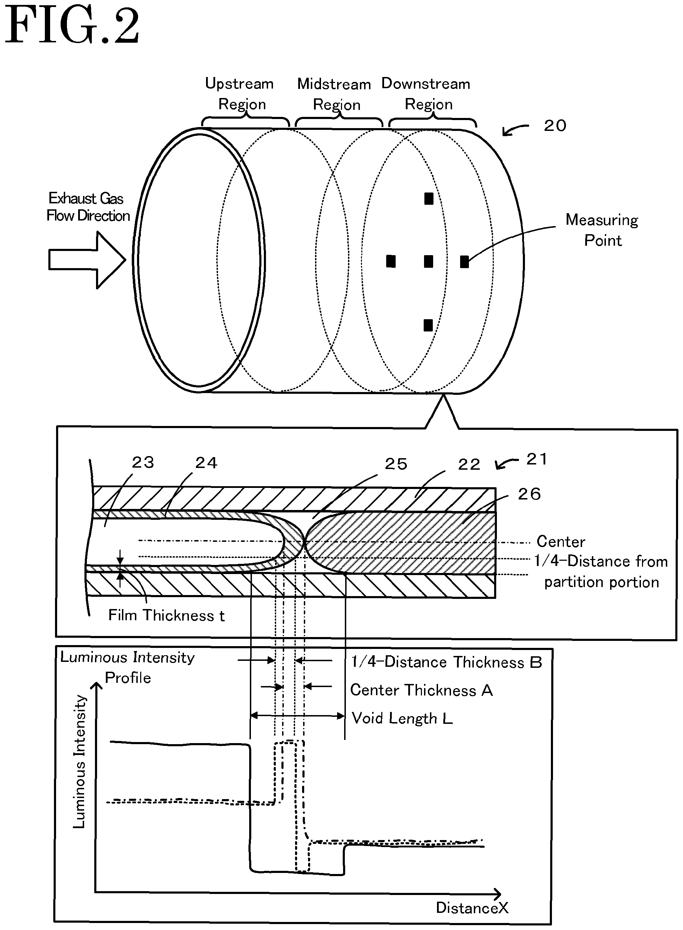

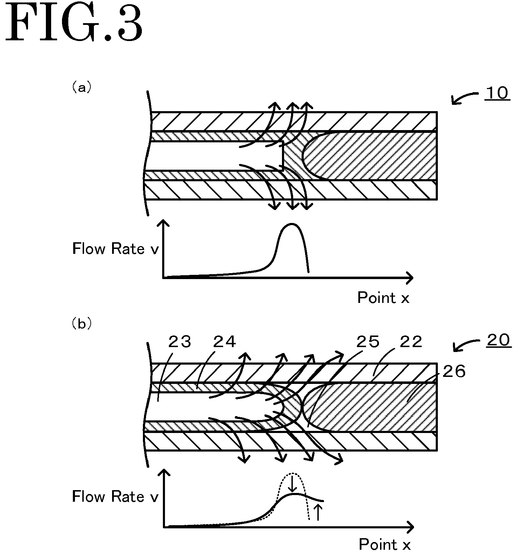

A honeycomb filter according to one embodiment of the present invention will be described below with reference to the accompanying drawings. Fig. 1 is a schematic explanatory view of the structure of a honeycomb filter 20 according to an embodiment of the present invention. Fig. 2 is an explanatory view of a method for calculating the thickness t, the center thickness A, the 1/4-distance thickness B, and the void length L. Fig. 3 is a schematic explanatory view of the flow of an exhaust gas at the outlet end of a cell 23. Fig. 3(a) is an explanatory view of a honeycomb filter 10 having no void. Fig. 3(b) is an explanatory view of a honeycomb filter 20 having a void 25. As illustrated in Fig. 1, a honeycomb filter 20 according to the present embodiment includes a plurality of porous partition portions 22 each forming a cell 23 serving as a flow path of a fluid, a sealing portion 26 for sealing an end of the cell 23, a trapping layer 24 for trapping solid components contained in the fluid, the trapping layer 24 being disposed on each of the partition portions 22, and a void 25 between the sealing portion 26 on an outlet side of the cell 23 and the trapping layer 24. The honeycomb filter 20 includes two or more honeycomb segments 21 joined together with a bonding layer 27. The honeycomb segments 21 include the partition portions 22. The honeycomb filter 20 is surrounded by an outer protective portion 28. Fig. 1 illustrates the cylindrical honeycomb filter 20, rectangular columnar honeycomb segments 21, and rectangular cells 23 as examples. The honeycomb filter 20 includes porous partition portions 22 each forming the cell 23, the cell 23 being open at one end and sealed with the sealing portion 26 at the other end and serving as an exhaust gas flow path, and the trapping layer 24 for trapping solid components (PM) contained in a fluid (exhaust gas), the trapping layer being disposed on each of the partition portions 22. In the honeycomb filter 20, the partition portions 22 are formed such that cells 23 that are open at a first end and sealed at a second end and cells 23 that are sealed at the first end and open at the second end are alternately disposed. In the honeycomb filter 20, an exhaust gas enters the cell 23 from the inlet side, passes through the trapping layer 24 and the partition portion 22, and is exhausted from an outlet cell 23, during which PM in the exhaust gas is trapped on the trapping layer 24.

The partition portion 22 is porous and may contain one or more inorganic materials selected from cordierite, Si-bonded SiC, recrystallized SiC, aluminum titanate, mullite, silicon nitride, SIALON, zirconium phosphate, zirconia, titania, alumina, and silica. Among these, cordierite, Si-bonded SiC, and recrystallized SiC are preferred. The partition portion 22 preferably has a porosity of 30% by volume or more and 85% by volume or less, more preferably 35% by volume or more and 65% by volume or less. The partition portion 22 preferably has an average pore size of 10 µm or more and 60 µm or less. The porosity and the average pore size of the partition portion 22 are measured by a mercury intrusion method. The partition portion 22 having such a porosity, an average pore size, and a thickness allows an exhaust gas to easily pass through the partition portion 22 and PM to be easily trapped and removed.

The trapping layer 24 for trapping and removing PM contained in an exhaust gas may be formed of particle groups having an average particle size smaller than the average pore size of the partition portion 22 and is disposed on the partition portion 22. The average size of raw material particles constituting the trapping layer 24 is preferably 0.5 µm or more and 15 µm or less. When the average size of particles constituting the trapping layer is 0.5 µm or more, a space between the particles constituting the trapping layer can be sufficiently provided, thus ensuring high permeability of the trapping layer and preventing a sudden increase in pressure loss. When the average size of particles constituting the trapping layer is 15 µm or less, there are a sufficient number of points of contact between the particles, ensuring a sufficient bond strength between the particles and a high peel strength of the trapping layer. The trapping layer 24 may be formed on the partition portion 22 of each of the cells 23a as the exhaust gas inlet cells and the cells 23b as the exhaust gas outlet cells. As illustrated in Fig. 1, preferably, the trapping layer 24 is formed on the partition portion 22 of each inlet cell 23a and is not formed on the partition portion 22 of each outlet cell 23b. This allows PM contained in a fluid to be efficiently removed with further decreased pressure loss. Furthermore, this facilitates the manufacture of the honeycomb filter 20. The trapping layer 24 may contain one or more inorganic materials selected from cordierite, SiC, mullite, aluminum titanate, alumina, silicon nitride, SIALON, zirconium phosphate, zirconia, titania, and silica. Preferably, the trapping layer 24 is formed of the material of the partition portion 22. The trapping layer 24 may contain 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite. The average particle size of raw material particles is the median size (D50) measured with a laser diffraction/scattering particle size distribution analyzer using water as a dispersion medium. The trapping layer 24 may be formed of particle groups of inorganic materials, and may be formed as a uniform layer on the surface of the partition portion 22 or as a partial layer on the surface of the partition portion 22.

The trapping layer 24 has a convex closed end facing the sealing portion 26 on the outlet side of the cell 23. This can reduce the permeation resistance of the trapping layer 24 and the partition portion 22 at the outlet end. Preferably, the perimeter of a cross-section of the trapping layer 24 decreases as the cross-section approaches the sealing portion 26. For example, the trapping layer 24 tapers down to the tip facing the sealing portion 26.

The trapping layer 24 may have a higher thickness at the center of the cell 23 at the outlet end of the cell 23. This is preferred because a fluid can easily pass through the trapping layer, the void, and the partition portion at the outlet end. The center thickness A is defined as the thickness of the trapping layer as viewed in a cross section in the same direction as the flow path of the cell 23 at the center of the cell 23 at the outlet end of the cell 23. The center thickness A of the trapping layer 24 may be 4 mm or more and 30 mm or less. When the center thickness A is 4 mm or more, this can improve trapping of solid components when a fluid passes at a high flow rate through the trapping layer 24. When the center thickness A is 30 mm or less, this can reduce an increase in the pressure loss of the trapping layer 24 on which solid components have been trapped. The center thickness A of the trapping layer 24 is preferably 8 mm or more and 25 mm or less, more preferably 15 mm or more and 20 mm or less. The 1/4-distance thickness B is defined as the thickness of the trapping layer 24 as viewed in a cross section in the same direction as the flow path of the cell 23 at a position spaced away from a surface of the partition portion by one fourth of the distance between the surface of the partition portion and a surface of an opposing partition portion at the outlet end of the cell 23 (see Fig. 1). The ratio A/B of the center thickness A to the 1/4-distance thickness B of the trapping layer 24 may be 1.1 or more and 1.8 or less. When the ratio A/B is 1.1 or more, this can improve trapping of solid components when a fluid passes at a high flow rate through the trapping layer 24. When the ratio A/B is 1.8 or less, this can reduce an increase in pressure loss when a fluid passes at a high flow rate through the trapping layer 24. The ratio A/B is preferably 1.3 or more and 1.6 or less.

The thickness t of the trapping layer 24 disposed on the partition portion 22 in a downstream region of the cell 23 may be 0.3 mm or more and 1.0 mm or less. When the thickness t is 0.3 mm or more, this can improve trapping of solid components and reduce an increase in pressure loss when a fluid passes at a high flow rate through the trapping layer. When the thickness t is 1.0 mm or less, this can reduce an increase in the pressure loss of the trapping layer on which solid components have been trapped. The thickness t is preferably 0.4 mm or more and 0.8 mm or less, more preferably 0.5 mm or more and 0.7 mm or less.

The void 25 is disposed between the sealing portion 26 and the trapping layer 24. The void 25 may be disposed between the sealing portion 26, the trapping layer 24, and the partition portion 22. The void 25 at the outlet end of the cell 23 enhances the flow of an exhaust gas. The void 25 may be larger on the partition portion 22 side than on the center side of the cell 23. This can reduce the permeation resistance of the trapping layer 24 and the partition portion 22 at the outlet end. Such a shape of the void 25 may be formed when the trapping layer 24 has a convex closed end facing the sealing portion 26 on the outlet side of the cell 23 or when the sealing portion 26 on the outlet side of the cell 23 has a convex end facing the trapping layer 24. As illustrated in Fig. 1, the void 25 may have a void length L of 0.5 mm or more and 6.0 mm or less as viewed in a cross section in the same direction as the flow path at the outlet end of the cell. The void length L is the length between a contact position between the trapping layer 24 and the partition portion 22 and a contact position between the sealing portion 26 and the partition portion 22. When the void length L is 0.5 mm or more, the presence of such a large void can reduce the permeation resistance of the trapping layer 24 and the partition portion 22 at the outlet end. When the void length L is 6.0 mm or less, this can reduce the strength reduction of the trapping layer 24 at the outlet end. The void length L is preferably 1.0 mm or more and 5.0 mm or less, more preferably 2.0 mm or more and 4.0 mm or less.

The void 25 may be formed by using a void-forming member that can be removed later. For example, while the inlet end face is directed upward, the void-forming member is put into each inlet cell from the inlet. Without using a transport medium (a fluid (such as a gas)), the void-forming member falls by gravity, and no medium permeates the porous partition. Thus, the void-forming member does not adhere to the partition surface and can be deposited only on the sealing portion at the downstream end of the inlet cell. The void-forming member may be put into each inlet cell by tapping. By suction from the downstream of the honeycomb filter, using a fluid, such as air, as a transport medium, trapping-layer-forming particles are then deposited on the partition surface and the downstream end of the inlet cell. The void-forming member can then be removed to form the void 25. The shape of the void 25, including the void length L and the distance between the outlet end of the trapping layer 24 and the sealing portion 26 can be adjusted by appropriately changing the amount of void-forming member to be supplied, the average particle size, the particle size distribution, and the material of the void-forming member, and the feed rate of the fluid. The shape of the trapping layer 24, such as the shape of the trapping layer 24 at the outlet end, can also be adjusted. Furthermore, a region on which the void-forming member is deposited can be controlled by adding an alcohol, water, or a resin in advance to the partition portion 22 in a predetermined region, such as an upstream region or a downstream region, of the honeycomb filter 20 (the honeycomb segment 21) to increase the permeation resistance to the fluid. The fluid serving as a transport medium is preferably a gas, such as air or a nitrogen gas. The void-forming member may be a member that can be consumed by heat treatment or a member that can be dissolved in a solvent. A member that can be consumed by heat treatment is preferred. This is because the void 25 can be formed simultaneously with the firing of the trapping layer, and this can simplify the manufacturing process. Examples of the member that can be consumed by heat treatment include carbon particles, such as carbon black particles, graphite particles, and coke particles, starch particles, cellulose particles, powdered sugar, and resin particles, such as polyethylene particles, polypropylene particles, acryl particles, nylon particles, and phenol particles. Among these, materials that can be burned at lower temperature, for example, carbon black particles and starch particles are preferred. The void-forming member is preferably particles having a particle size smaller than the pore size of the partition portion 22, preferably 0.001 or more and 0.50 or less times, more preferably 0.01 or more and 0.40 or less times, the average pore size of the partition portion 22. The void-forming member preferably has an average particle size of 0.01 µm or more and 20 µm or less, more preferably 0.1 µm or more and 12 µm or less. The fluid may be supplied to the cell 23 by pressurization from the inlet side and suction from the outlet side. After the void-forming member is deposited on the partition portion 22 and in the vicinity of the sealing portion 26, the void-forming member is removed by removal treatment. When a void-forming member that can be consumed by heat treatment is used, the heat-treatment temperature is preferably 400°C or more and 1000°C or less in an oxidizing atmosphere. In the case that the trapping layer 24 and the void 25 are formed at the same time as described below, the trapping layer 24 may be formed at 650°C or more and 1350°C or less. Thus, the void 25 can be relatively easily formed by using the void-forming member. A method for depositing the void-forming member is not limited to the method described above. For example, a slurry containing the void-forming member may be put into the cell 23 to deposit the void-forming member on the partition portion 22 and in the vicinity of the sealing portion 26.

A method for forming the trapping layer 24 may involve supplying a fluid containing the raw material for the trapping layer to an inlet cell using a fluid as a transport medium for the raw material for the trapping layer. This is preferred because the particle groups constituting the trapping layer become coarse and can form a trapping layer having a very high porosity. The trapping layer is preferably formed after depositing a void-forming member. The fluid as a transport medium is preferably a gas such as oxygen gas and nitrogen gas. The raw material for the trapping layer may be inorganic fiber or inorganic particles. The inorganic fiber may be the inorganic fibers described above or the inorganic material made into fibrous from, and preferably has an average diameter of 0.5 µm or more and 8 µm or less and an average length of 100 µm or more and 500 µm or less. The inorganic particles may be particles made of the inorganic material described above. For example, SiC particles or cordierite particles having an average particle size of 0.5 µm or more and 15 µm or less can be used. The raw material for the trapping layer preferably has an average particle size smaller than the average pore size of the partition portion 22. In this case, the inorganic material of the partition portion 22 is preferably the same as the inorganic material of the trapping layer 24. A gas containing inorganic particles is preferably introduced by suction on the gas outlet side. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the material of the particles constituting the partition portion with silica. In the case of an oxide material, such as cordierite or aluminum titanate, inorganic particles and inorganic particles and material of partition portions are preferably bound by sintering. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles. The trapping layer 24 may be formed on the cell using a slurry containing inorganic particles serving as the raw material of the trapping layer 24.

As illustrated in Fig. 1, the upstream region, the midstream region, and the downstream region of the honeycomb filter 20 refer to three regions of an upstream zone, a middle zone, and a downstream zone in the flow path direction of the honeycomb filter 20. Fig. 2 is an explanatory view of a method for calculating the film thickness t, the center thickness A, the 1/4-distance thickness B, and the space length L. As illustrated in Fig. 2, the thickness t is determined by averaging measurements at five points, that is, the central point in a central region and four points located above, below, and to the left and right of the central point, in a cross-section of the honeycomb filter 20 approximately 10% of the total length of the honeycomb filter 20 upstream from the outlet end face of the honeycomb filter 20. The center thickness A, the 1/4-distance thickness B, and the void length L are determined as described below. First, the honeycomb filter 20 is cut with a diamond cutter at a midsection of the channel (cell) in the axial direction of the honeycomb filter 20. After removing chips by air blowing, measurements are performed with a CNC image measurement system ("xx" manufactured by Nikon Corp.) at an optical magnification in the range of 0.5 to 2.0. A luminous intensity profile is measured on a center line between the partitions from the inlet end face to the outlet sealing portion. An inlet surface layer point of the trapping layer, a downstream point of the trapping layer, and the tip of the sealing portion are detected as peaks on a differential graph of the luminous intensity profile. The distance between the inlet surface layer point of the trapping layer and the downstream point of the trapping layer is defined as the center thickness A. The 1/4-distance thickness B and the void length L are determined by measuring these void characteristics with a caliper at the central position (1/4-distance) between the center line and a surface layer of the partition and at a position slightly inside the surface layer of the partition. The center thickness A, the 1/4-distance thickness B, and the void length L in a cross-section perpendicular to the axial direction of the honeycomb filter 20 are mean values of 20 measurements in four channels each at five points, that is, the central point in the central region and four points located above, below, and to the left and right of the central point in the cross-section.

The sealing portion 26 is made of a material through which little or no exhaust gas in the cell 23 can pass. The sealing portion 26 on the outlet end face may have a convex end facing the trapping layer. This can reduce the permeation resistance of the trapping layer and the partition portion at the outlet end. Preferably, the perimeter of a cross-section of the sealing portion 26 decreases as the cross-section approaches the trapping layer 24. For example, the sealing portion 26 tapers down to the tip facing the trapping layer 24. This can form the void 25 having a preferred shape and reduce permeation resistance. The shape of the sealing portion 26 is not limited to this. The sealing portion 26 may have a flat or concave end on the trapping layer side.

The bonding layer 27 is a layer for joining the honeycomb segments 21 together and may contain inorganic particles, inorganic fiber, and a binding material. The inorganic particles may be particles of the inorganic material described above and preferably have an average particle size of 0.1 µm or more and 30 µm or less. The inorganic fiber may contain one or more materials selected from aluminosilicate, alumina, silica, zirconia, ceria, and mullite. The inorganic fiber preferably has an average diameter of 0.5 µm or more and 8 µm or less and an average length of 100 µm or more and 500 µm or less. The binding material may be colloidal silica or clay. The bonding layer 27 preferably has a thickness of 0.5 mm or more and 2 mm or less. The outer protective portion 28 is a layer for protecting the periphery of the honeycomb filter 20 and may contain the inorganic particles, the inorganic fiber, and the binding material described above.

In the honeycomb filter 20, the thermal expansion coefficient of the cells 23 at a temperature in the range of 40°C to 800°C in the longitudinal direction is preferably 6.0 x 10⁻⁶/°C or less, more preferably 1.0 x 10⁻⁶/°C or less, still more preferably 0.8 x 10⁻⁶/°C or less. At a thermal expansion coefficient of 6.0 x 10⁻⁶/°C or less, thermal stress generated by exposure to a high-temperature exhaust gas can be within tolerance.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a square columnar (quadrangular prismatic, hexagonal columnar, or the like) with a polygonal cross section. The cross section of the cells may be polygonal, such as triangular, tetragonal, hexagonal, or octagonal, circular, or streamlined, such as elliptical, or combination thereof. For example, the cell 23 may have a tetragonal cross section perpendicular to the exhaust gas flow direction.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portions 22 may be determined in consideration of trade-offs between initial pressure loss, pressure loss during PM deposition, and PM trapping efficiency.

The honeycomb filter 20 may be loaded with a catalyst. The catalyst may be at least one of a catalyst for promoting the combustion of trapped PM, a catalyst for oxidizing unburned gases (HCs, CO, and the like) contained in an exhaust gas, and a catalyst for occluding/adsorbing/decomposing NOₓ. The catalyst can increase the efficiency of burning PM, oxidizing unburned gases, or decomposing NOₓ. The catalyst more preferably contains at least one of noble metal elements and transition metal elements. The honeycomb filter 20 may be loaded with another catalyst or a purification material. Among those are a NOₓ storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing NOₓ can more highly purify an exhaust gas.

Use of the honeycomb filter 20 will be described below. As illustrated in Fig. 3(a), in a honeycomb filter 10 having no void 25, the trapping layer 24 fills the space between the partition portions 22 and the sealing portion 26 at the outlet end. In general, because of permeation resistance, an exhaust gas tends to pass through the partition portion 22 mostly in the vicinity of the outlet end face of the cell 23. Thus, in the honeycomb filter 10, the flow rate distribution has a peak at the rearmost portion of the trapping layer 24 (see the bottom of Fig. 3(a)). As illustrated in Fig. 3(b), in a honeycomb filter 20 having a void 25 at the outlet end of the trapping layer 24, even when an exhaust gas passes through the partition portion 22 mostly in the vicinity of the outlet end face of the cell 23, the exhaust gas passes through the partition portion 22 more widely through the void 25. This can make the flow rate in the vicinity of the peak more uniform and lower the peak in the flow rate distribution. This can improve trapping efficiency when no PM is deposited. The void 25 can also separate a maximum flow rate portion at the outlet end of the trapping layer from a deposition portion on which solid components are deposited. This can reduce an increase in pressure loss when a fluid passes at a high flow rate through the trapping layer on which PM has been deposited.

The honeycomb filter 20 according to the present embodiment includes the void 25 between the trapping layer 24 and the sealing portion 26 on the outlet side of the cell 23. The void 25 can reduce the permeation resistance of the trapping layer 24 at the outlet end and reduce an increase in maximum partition permeate flow rate, which is the maximum flow rate of a fluid passing through the partition portion 22. This can improve trapping efficiency when no PM is deposited. The void 25 can also separate the maximum flow rate portion of the trapping layer 24 at the outlet end from the deposition portion on which PM is deposited. This can reduce an increase in pressure loss when a fluid passes at a high flow rate through the trapping layer 24 on which PM has been deposited. Thus, in the honeycomb filter 20, the void 25 can reduce pressure loss and improve trapping of PM contained in the fluid.

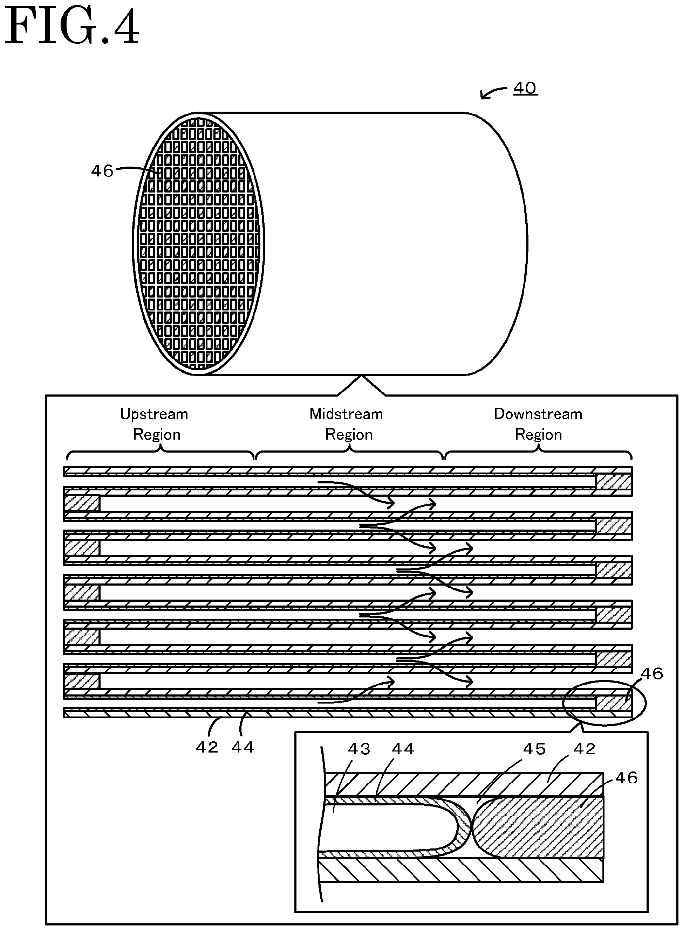

Although the honeycomb segments 21 are joined together with the bonding layer 27 in the honeycomb filter 20 according to the present embodiment, an integrally molded honeycomb filter 40 as illustrated in Fig. 4 is also suitable. In the honeycomb filter 40, partition portions 42, cells 43, trapping layers 44, voids 45, and sealing portions 46 may be the same as the partition portions 22, the cells 23, the trapping layers 24, the voids 25, and the sealing portions 26 of the honeycomb filter 20. This can also improve trapping and removal of PM contained in an exhaust gas.

Although the honeycomb filter 20 contains a catalyst in the present embodiment, any honeycomb filter that can filter out substances to be removed in a fluid is suitable. The honeycomb filter 20 may contain no catalyst. Although the honeycomb filter 20 traps PM in an exhaust gas, any honeycomb filter for trapping and removing solid components contained in a fluid may be suitable. For example, honeycomb filters for use in engines of construction equipment and honeycomb filters for use in factories and power plants are also suitable.

Although the inlet cells and the outlet cells have the same opening area in the embodiments described above, outlet cells that are sealed at a first end and open at a second end and inlet cells that are open at the first end and sealed at the second end and have a larger opening area than the outlet cells may be alternately disposed. This can enhance the flow of an exhaust gas and facilitate trapping of PM.

### [Examples]

Specific experimental examples of the manufacture of a honeycomb filter will be described below. A honeycomb filter including honeycomb segments joined together was manufactured.

[Process of Forming Honeycomb Segment] A SiC powder and a metallic Si powder were mixed at a mass ratio of 80:20. The resulting mixture was kneaded with methylcellulose, hydroxypropoxylmethylcellulose, a surfactant, and water to prepare a plastic pug. The pug was extruded through a die to form a honeycomb segment formed product having a desired shape. The honeycomb segment formed product was dried using a microwave and then with hot air, was sealed, was calcined in an oxidizing atmosphere at 550°C for three hours, and was baked in an inert atmosphere at 1400°C for two hours. The sealing portions were formed by masking alternate cell openings in one end face of the segment formed product and immersing the masked end face in a sealing slurry containing a SiC raw material, thereby alternately forming openings and sealing portions. The other end face was then masked in the same manner. The sealing portions were formed such that cells that were open at a first end and sealed at a second end and cells that were sealed at the first end and open at the second end were alternately disposed. The honeycomb filter had a cross-section diameter of 144 mm and a length of 152 mm. The cell density was 46.5 cell/cm². The partition portions had a thickness of 0.25 mm. The inlet cells had an octagonal cross-section. The distance between opposite partition portions of the inlet cells was 1.41 mm. The outlet cells had a tetragonal cross-section. The distance between opposite partition portions of the outlet cells was 1.01 mm. The honeycomb segments had a porosity of 50% and an average pore size of 15 µm. The porosity and the average pore size of the partition portions were measured with a mercury porosimeter (Auto Pore III 9405 manufactured by Micromeritics).

[Process of Forming Trapping Layer Void] While the open ends (inlet end faces) of the honeycomb segments on the exhaust gas inlet side were directed upward, a void-forming member was put into each inlet cell from the inlet. The void-forming member was deposited on the sealing portions at the downstream ends of the inlet cells. The void-forming member was carbon black particles having an average particle size of 0.01 µm. The amount of deposited void-forming member was 1 g per liter of the base material of the honeycomb segments. The void length L, the center thickness A, the 1/4-distance thickness B, and the thickness t in Fig. 1 were adjusted by changing the amount, the feed rate, the average particle size, and the material of the void-forming member. Air containing SiC particles having an average particle size smaller than the average pore size of the partition was introduced from open ends of the honeycomb segments on the exhaust gas inlet side while drawn in by suction from the outlet side of the honeycomb segments. The SiC particles were deposited on the surface layers of the cell partition portions on the exhaust gas inlet side. Thus, the void-forming member was disposed between the SiC particles and the sealing portions in a downstream region at the outlet end of the cells. Heat treatment in the atmosphere at 1300°C for two hours was performed to burn the void-forming member and join the SiC particles deposited on the surface layers of the partitions together and the deposited SiC particles and SiC and Si particles constituting the partitions together. Thus, the void-forming member was consumed to form voids between the trapping layers, the sealing portions, and the partition portions at the outlet end of the cells. The trapping layers were also formed on the partition portions. The average particle size of the raw material particles (the partition portions, the trapping layers, the void-forming members, and the like) is the median size (D50) measured with a laser diffraction/scattering particle size distribution analyzer (LA-910 manufactured by Horiba, Ltd.) using water as a dispersion medium.

[Process of Forming Honeycomb Filter] A binder slurry prepared by kneading alumina silicate fiber, colloidal silica, poly(vinyl alcohol), SiC, and water was applied to a side surface of each of the honeycomb segments thus formed. The honeycomb segments were assembled and pressed against each other and were heat-dried to form a tetragonal honeycomb segment assembly. The honeycomb segment assembly was cylindrically ground. A coating slurry composed of the same materials as the binder slurry was then applied to the honeycomb segment assembly and was hardened by drying to manufacture a cylindrical honeycomb filter having a desired shape, segment shape, and cell structure.

[Catalyst Loading Process] Alumina, platinum, and a ceria-based material were mixed at a ratio of 7:0.5:2.5 based on the mass ratio to prepare an aqueous catalyst slurry. The ceria-based material was Ce:Zr:Pr:Y:Mn = 60:20:10:5:5 based on the mass ratio. The outlet end face (exhaust gas outlet side) of the honeycomb segment was immersed in the catalyst slurry up to a predetermined height. The catalyst slurry was drawn in by suction from the inlet end face (the exhaust gas inlet side) at a predetermined suction pressure and suction flow rate for a predetermined time to allow the catalyst to be loaded on the partition, was dried at 120°C for two hours, and was baked at 550°C for one hour. The amount of catalyst per unit volume of the honeycomb filter was 30 g/L.

(Measurement of Trapping Layer Thickness and Void Length L) The thickness t was determined by averaging measurements at five points, that is, the central point in a central region and four points located above, below, and to the left and right of the central point, in a cross-section of the honeycomb filter approximately 10% of the total length of the honeycomb filter upstream from the outlet end face of the honeycomb filter (see Fig. 2). The honeycomb filter was cut with a diamond cutter at a midsection of the channel in the axial direction of the honeycomb filter. After removing chips by air blowing, measurements were performed as described below with a CNC image measurement system ("xx" manufactured by Nikon Corp.) at an optical magnification in the range of 0.5 to 2.0. A luminous intensity profile was measured on a center line between the partitions from the inlet end face to the outlet sealing portion. An inlet surface layer point of the trapping layer, a downstream point of the trapping layer, and the tip of the sealing portion were detected as peaks on a differential graph of the luminous intensity profile. The distance between the inlet surface layer point of the trapping layer and the downstream point of the trapping layer was defined as the center thickness A. The 1/4-distance thickness B and the void length L were determined by measuring these void characteristics with a caliper at the central position (1/4-distance) between the center line and a surface layer of the partition and at a position slightly inside the surface layer of the partition. The center thickness A, the 1/4-distance thickness B, and the void length L in a cross-section perpendicular to the axial direction of the honeycomb filter were mean values of 20 measurements in four channels each at five points, that is, the central point in the central region and four points located above, below, and to the left and right of the central point in the cross-section.

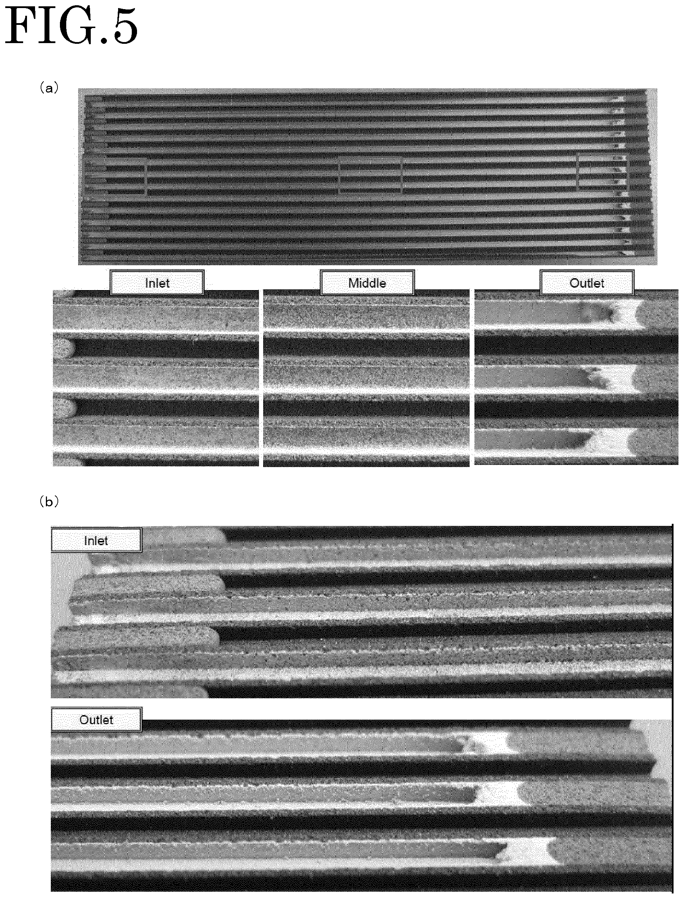

(Experimental Example 1) (reference) In a honeycomb filter according to Experimental Example 1, referring to Fig. 1, the thickness t of the trapping layer on the partition portion in the downstream region was 0.8 mm, the void length L was 0 mm, the center thickness A was 15 mm, the 1/4-distance thickness B was 15 mm, and the ratio A/B was 1.0. In Experimental Example 1, the Process of Forming Trapping Layer described above was performed without using the void-forming member to manufacture a honeycomb filter having no void. Fig. 5 shows cross-sectional photographs of the cells in Experimental Example 1 in the flow direction. As illustrated in Fig. 5, the vicinity of the sealing portion was filled with the trapping layer.

(Experimental Examples 2 to 8)Honeycomb filters having different void lengths L were manufactured in Experimental Examples 2 to 8. The thickness t of the trapping layer on the partition portion in the downstream region was 0.8 mm, the void length L was 0.3 mm, the center thickness A was 15 mm, the 1/4-distance thickness B was 11.5 mm, and the ratio A/B was 1.3. The Process of Forming Trapping Layer Void described above was performed to manufacture a honeycomb filter according to Experimental Example 2, which included a void between the sealing portion, the trapping layer, and the partition portion at the outlet end of the cell (see Fig. 1). A honeycomb filter according to Experimental Example 3 was manufactured through the same process as in Experimental Example 2 except that the void length L was 0.5 mm. A honeycomb filter according to Experimental Example 4 was manufactured through the same process as in Experimental Example 2 except that the void length L was 1.0 mm. A honeycomb filter according to Experimental Example 5 was manufactured through the same process as in Experimental Example 2 except that the void length L was 3.0 mm. A honeycomb filter according to Experimental Example 6 was manufactured through the same process as in Experimental Example 2 except that the void length L was 5.0 mm. A honeycomb filter according to Experimental Example 7 was manufactured through the same process as in Experimental Example 2 except that the void length L was 6.0 mm. A honeycomb filter according to Experimental Example 8 was manufactured through the same process as in Experimental Example 2 except that the void length L was 7.0 mm.

(Experimental Examples 9 to 16) Honeycomb filters according to Experimental Examples 9 to 16 were manufactured by changing the center thickness A so as to keep the ratio A/B constant. In a honeycomb filter having a void according to Experimental Example 9, the thickness t of the trapping layer on the partition portion in the downstream region was 0.8 mm, the void length L was 0.5 mm, the center thickness A was 2 mm, the 1/4-distance thickness B was 1.5 mm, and the ratio A/B was 1.3. A honeycomb filter according to Experimental Example 10 was manufactured through the same process as in Experimental Example 9 except that the center thickness A was 4 mm, and the 1/4-distance thickness B was 3.1 mm. A honeycomb filter according to Experimental Example 11 was manufactured through the same process as in Experimental Example 9 except that the center thickness A was 8 mm, and the 1/8-distance thickness B was 6.2 mm. A honeycomb filter according to Experimental Example 12 was manufactured through the same process as in Experimental Example 9 except that the center thickness A was 15 mm, and the 1/15-distance thickness B was 11.5 mm. A honeycomb filter according to Experimental Example 13 was manufactured through the same process as in Experimental Example 9 except that the center thickness A was 20 mm, and the 1/4-distance thickness B was 15.4 mm. A honeycomb filter according to Experimental Example 14 was manufactured through the same process as in Experimental Example 9 except that the center thickness A was 25 mm, and the 1/4-distance thickness B was 19.2 mm. A honeycomb filter according to Experimental Example 15 was manufactured through the same process as in Experimental Example 9 except that the center thickness A was 30 mm, and the 1/4-distance thickness B was 23.1 mm. A honeycomb filter according to Experimental Example 16 was manufactured through the same process as in Experimental Example 9 except that the center thickness A was 35 mm, and the 1/4-distance thickness B was 26.9 mm.

(Experimental Examples 17 to 22) Honeycomb filters according to Experimental Examples 17 to 22 were manufactured by changing the ratio A/B so as to keep the center thickness A constant. In a honeycomb filter having a void according to Experimental Example 17, the thickness t of the trapping layer on the partition portion in the downstream region was 0.8 mm, the void length L was 0.5 mm, the center thickness A was 15 mm, the 1/4-distance thickness B was 14.3 mm, and the ratio A/B was 1.05. A honeycomb filter according to Experimental Example 18 was manufactured through the same process as in Experimental Example 17 except that the 1/4-distance thickness B was 13.6 mm, and the ratio A/B was 1.1. A honeycomb filter according to Experimental Example 19 was manufactured through the same process as in Experimental Example 17 except that the 1/4-distance thickness B was 11.5 mm, and the ratio A/B was 1.3. A honeycomb filter according to Experimental Example 20 was manufactured through the same process as in Experimental Example 17 except that the 1/4-distance thickness B was 9.4 mm, and the ratio A/B was 1.6. A honeycomb filter according to Experimental Example 21 was manufactured through the same process as in Experimental Example 17 except that the 1/4-distance thickness B was 8.3 mm, and the ratio A/B was 1.8. A honeycomb filter according to Experimental Example 22 was manufactured through the same process as in Experimental Example 17 except that the 1/4-distance thickness B was 7.5 mm, and the ratio A/B was 2.0.

(Experimental Examples 23 to 27) Honeycomb filters having different thicknesses t were manufactured in Experimental Examples 23 to 27. In a honeycomb filter having a void according to Experimental Example 23, the thickness t of the trapping layer on the partition portion in the downstream region was 0.2 mm, the void length L was 0.5 mm, the center thickness A was 15 mm, the 1/4-distance thickness B was 11.5 mm, and the ratio A/B was 1.3. A honeycomb filter according to Experimental Example 24 was manufactured through the same process as in Experimental Example 23 except that the thickness t was 0.3 mm. A honeycomb filter according to Experimental Example 25 was manufactured through the same process as in Experimental Example 23 except that the thickness t was 0.5 mm. A honeycomb filter according to Experimental Example 26 was manufactured through the same process as in Experimental Example 23 except that the thickness t was 1.0 mm. A honeycomb filter according to Experimental Example 27 was manufactured through the same process as in Experimental Example 23 except that the thickness t was 1.2 mm.

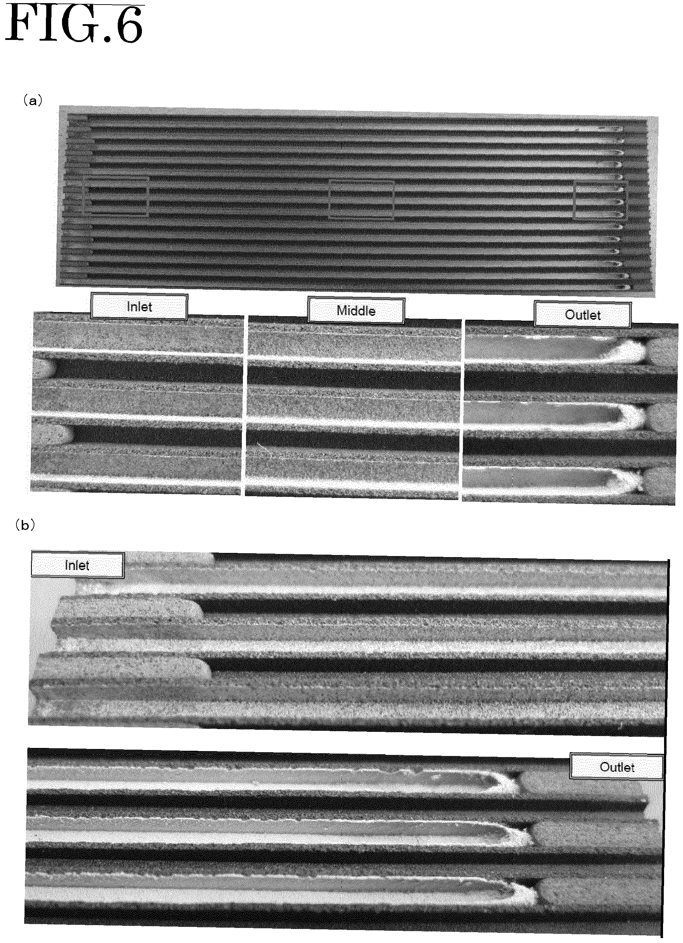

Fig. 6 shows cross-sectional photographs of the cells in Experimental Example 4 in the flow direction. As illustrated in Fig. 6, in the vicinity of the sealing portion, a void was formed between the sealing portion, the trapping layer, and the partition portion at the outlet end of the cell. The trapping layer had a convex end facing the sealing portion on the outlet side of the cell, and the sealing portion had a convex end facing the trapping layer. Table 1 summarizes the manufacturing conditions and measurement results described below.

**[Table 1]**

| Experimental Example No | Thickness in Downstream t [mm] | Void Length L [mm] | Center Thickness A [mm] | 1/4-Distance Thickness B [mm] | A/B [-] | Pressure Loss at High Rotational Speed under High Load [kPa] | Peeling at High Rotational Speed under High Load | Trapping Efficiency at High Rotational Speed under High Load [%] | Pressure Loss in the Presence of Ash [kPa] |
|---|---|---|---|---|---|---|---|---|---|
| Experimental Example 1 * | 0.8 | 0.0 | 15 | 15.0 | 1.0 | 42 | ○ | 63 | 13 |
| Experimental Example 2 | 0.8 | 0.3 | 15 | 11.5 | 1.3 | 33 | ○ | 72 | 13 |
| Experimental Example 3 | 0.8 | 0.5 | 15 | 11.5 | 1.3 | 26 | ○ | 88 | 13 |
| Experimental Example 4 | 0.8 | 1.0 | 15 | 11.5 | 1.3 | 24 | ○ | 92 | 13 |
| Experimental Example 5 | 0.8 | 3.0 | 15 | 11.5 | 1.3 | 23 | ○ | 93 | 13 |
| Experimental Example 6 | 0.8 | 5.0 | 15 | 11.5 | 1.3 | 23 | ○ | 93 | 13 |
| Experimental Example 7 | 0.8 | 6.0 | 15 | 11.5 | 1.3 | 23 | ○ | 93 | 13 |
| Experimental Example 8 | 0.8 | 7.0 | 15 | 11.5 | 1.3 | 27 | × | 58 | - |
| Experimental Example 9 | 0.8 | 0.5 | 2 | 1.5 | 1.3 | 32 | ○ | 84 | 13 |
| Experimental Example 10 | 0.8 | 0.5 | 4 | 3.1 | 1.3 | 25 | ○ | 89 | 13 |
| Experimental Example 11 | 0.8 | 0.5 | 8 | 6.2 | 1.3 | 23.5 | ○ | 92 | 13 |
| Experimental Example 12 | 0.8 | 0.5 | 15 | 11.5 | 1.3 | 23 | ○ | 93 | 13 |
| Experimental Example 13 | 0.8 | 0.5 | 20 | 15.4 | 1.3 | 23 | ○ | 93 | 13 |
| Experimental Example 14 | 0.8 | 0.5 | 25 | 19.2 | 1.3 | 23 | ○ | 93 | 13 |
| Experimental Example 15 | 0.8 | 0.5 | 30 | 23.1 | 1.3 | 23 | ○ | 93 | 14 |
| Experimental Example 16 | 0.8 | 0.5 | 35 | 26.9 | 1.3 | 23 | ○ | 93 | 22 |
| Experimental Example 17 | 0.8 | 0.5 | 15 | 14.3 | 1.1 | 32 | ○ | 89 | 13 |
| Experimental Example 18 | 0.8 | 0.5 | 15 | 13.6 | 1.1 | 24 | ○ | 91 | 13 |
| Experimental Example 19 | 0.8 | 0.5 | 15 | 11.5 | 1.3 | 23 | ○ | 93 | 13 |
| Experimental Example 20 | 0.8 | 0.5 | 15 | 9.4 | 1.6 | 23 | ○ | 93 | 13 |
| Experimental Example 21 | 0.8 | 0.5 | 15 | 8.3 | 1.8 | 23 | ○ | 93 | 13 |
| Experimental Example 22 | 0.8 | 0.5 | 15 | 7.5 | 2.0 | 28 | × | 59 | - |
| Experimental Example 23 | 0.2 | 0.5 | 15 | 11.5 | 1.3 | 34 | ○ | 68 | 13 |
| Experimental Example 24 | 0.3 | 0.5 | 15 | 11.5 | 1.3 | 24 | ○ | 86 | 13 |
| Experimental Example 25 | 0.5 | 0.5 | 15 | 11.5 | 1.3 | 23 | ○ | 92 | 13 |
| Experimental Example 26 | 1.0 | 0.5 | 15 | 11.5 | 1.3 | 23 | ○ | 93 | 15 |
| Experimental Example 27 | 1.2 | 0.5 | 15 | 11.5 | 1.3 | 23 | ○ | 93 | 24 |

| | | | | | | | | | |
|---|---|---|---|---|---|---|---|---|---|
| Wherein *denotes a reference example. | | | | | | | | | |

### (1) Pressure Less Test at High Rotational Speed under High Load

A honeycomb filter thus manufactured was installed immediately downstream of a turbocharger for a 2.0-L diesel engine. After the engine was stably run at idle, the engine was instantaneously activated to 4000 rpm and 240 Nm. The pressure loss behavior of the honeycomb filter was measured, and the maximum pressure loss was evaluated as one of the pressure loss characteristics of the honeycomb filter. A pressure loss of more than 30 kPa results in a 5% or more decrease in output, thus adversely affecting the vehicle characteristics.

### (2) Peeling Test at High Rotational Speed under High Load

After the measurement of pressure loss at a high rotational speed under high load, air was blown from the outlet end of the honeycomb filter at a pressure of 0.4 MPa and a nozzle diameter of 3 mm to check for peeling of a trapping layer. Peeling of a trapping layer may negate the effects of the trapping layer, increase pressure loss, and decrease mileage of vehicles.

### (3) Trapping Efficiency Test at High Rotational Speed under High Load

In the measurement of pressure loss at a high rotational speed under high load, the smoke concentration was measured at the inlet and the outlet of the honeycomb filter with a smoke meter (a smoke meter AVL415S manufactured by AVL). The trapping efficiency was calculated from the difference in smoke concentration between the inlet and the outlet of the honeycomb filter. A trapping efficiency of less than 80% may result in blackened tailpipes. Thus, the trapping efficiency should be 80% or more.

### (4) Pressure Loss Test in the Presence of Ash

After 40 g of oil ash was deposited in an engine bench, the pressure loss was measured in a steady state at 2000 rpm and 45 Nm. The test showed that a pressure loss of more than 20 kPa might cause a 5% or more decrease in the mileage of vehicles. Thus, it must be avoided.

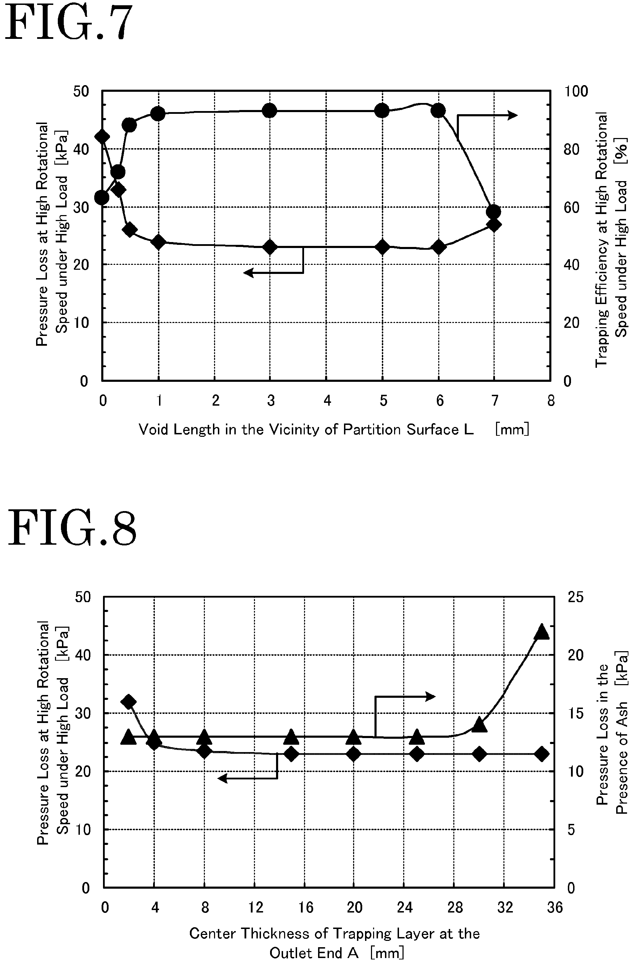

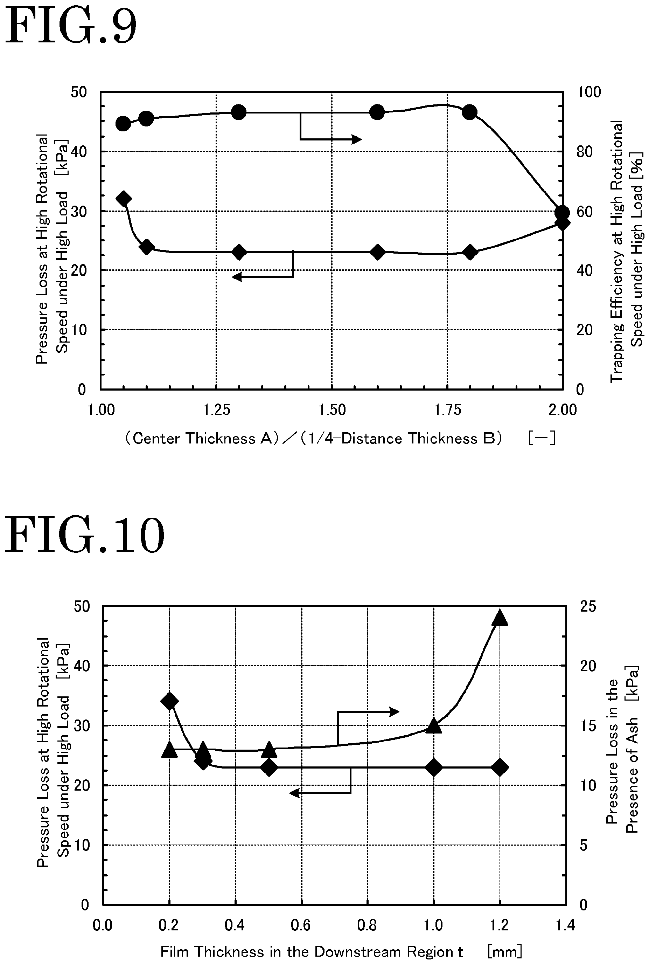

(Experimental Results) Table 1 shows the measurement results for Experimental Examples 1 to 27. Fig. 7 shows the measurement results of pressure loss (kPa) and trapping efficiency (%) at a high rotational speed under high load as a function of void length L (mm). Fig. 8 shows the measurement results of pressure loss (kPa) at a high rotational speed under high load and pressure loss (kPa) in the presence of ash as a function of center thickness A (mm). Fig. 9 shows the measurement results of pressure loss (kPa) and trapping efficiency (%) at a high rotational speed under high load as a function of ratio A/B (-). Fig. 10 shows the measurement results of pressure loss (kPa) at a high rotational speed under high load and pressure loss (kPa) in the presence of ash as a function of thickness t (mm). Table 1 shows that at least one of pressure loss at a high rotational speed under high load and trapping efficiency at a high rotational speed under high load was improved in Experimental Examples 2 to 27 in which the void was formed as compared with Experimental Example 1 in which no void was formed.

Table 1 and Fig. 7 show that a void length L of less than 0.5 mm resulted in a marked increase in pressure loss at a high rotational speed under high load. This is probably because the effects of the void were markedly reduced. A void length L of more than 6.0 mm resulted in a large decrease in trapping efficiency at a high rotational speed under high load. This is probably because an increase in permeation resistance due to an increased volume of the trapping layer through which a fluid passed (fluid passage volume) and an increase in partition passage flow rate due to a decreased effective volume of the inlet channel surpassed the pressure loss reduction effects due to the uniform partition permeate flow rate at the channel downstream end. Table 1 and Fig. 8 show that a center thickness A of less than 4 mm resulted in an increase in pressure loss at a high rotational speed under high load. This is probably because a marked strength reduction of the trapping layer made it difficult to trap PM on the trapping layer. A center thickness A of more than 30 mm resulted in a marked increase in pressure loss in the presence of ash. This is probably because adverse effects on pressure loss due to an increase in partition passage flow rate after ash deposition caused by a decreased effective volume of the inlet channel surpassed the pressure loss reduction effects due to the uniform partition permeate flow rate at the channel downstream end. Table 1 and Fig. 9 show that when the ratio A/B of the center thickness A to the 1/4-distance thickness B was less than 1.1, this resulted in an increase in pressure loss at a high rotational speed under high load. This is probably because when the center thickness was close to the 1/4-distance thickness, a fluid tended to pass through a portion of the trapping layer near the partition, including a portion having the 1/4-distance thickness B, as compared with the central portion of the trapping layer, which was farther away from the partition, and this prevented the partition passage flow rate from becoming uniform, thereby increasing the maximum partition passage flow rate. A ratio A/B of more than 1.8 resulted in a large decrease in trapping efficiency at a high rotational speed under high load. This is probably because a larger center thickness A than the thickness of a portion of the trapping layer closer to the partition, including a portion having a 1/4-distance thickness B, resulted in a decrease in the amount of fluid passing through the trapping layer in the vicinity of the central portion, and this also prevented the partition passage flow rate from becoming uniform, thereby increasing the maximum partition passage flow rate. Table 1 and Fig. 10 show that when the thickness t of the trapping layer in the downstream region was less than 0.3 mm, this resulted in a marked increase in pressure loss at a high rotational speed under high load. This is probably because it is difficult to produce the effects of the trapping layer, that is, the effects of reducing PM deposition on the partition portion and reducing an increase in initial pressure loss. A thickness t of more than 1.0 mm resulted in a marked increase in pressure loss in the presence of ash. This is probably because an increase in the thickness of the trapping layer resulted in an increase in permeation resistance.

Thus, it was found that the formation of a void between the sealing portion and the trapping layer on the outlet side of the cell decreased pressure loss and improved trapping efficiency. It was also found that the trapping layer preferably had a convex (tapering) outlet end facing the sealing portion. It was also found that the sealing portion on the outlet side preferably had a convex (tapering) end facing the trapping layer and that the void was preferably larger on the partition portion side than on the center side of the cell. It was also found that the void length L was preferably 0.5 mm or more and 6.0 mm or less. It was also found that the trapping layer preferably had a higher thickness at the center of the cell at the outlet end of the cell, the center thickness A was preferably 4 mm or more and 30 mm or less, and the ratio A/B was preferably 1.1 or more and 1.8 or less. It was also found that the trapping layer preferably had a thickness t of 0.3 mm or more and 1.0 mm or less in the downstream region.

### Industrial Applicability

The present invention can suitably be applied to filters for purifying exhaust gases emitted from automobile engines, stationary engines for construction equipment, industrial stationary engines, and combustion equipment.

## Claims

1. A honeycomb filter (20) for trapping solid components contained in a fluid, comprising:
a plurality of porous partition portions (22) each forming a cell (23) serving as a flow path of the fluid;
a sealing portion (26) for sealing an end of the cell (23) ;
a trapping layer (24) for trapping solid components contained in the fluid, the trapping layer (24) being disposed on each of the partition portions (22); and
a void (25) between the sealing portion (26) on an outlet side of the cell (23) and the trapping layer (24);
wherein the trapping layer (24) has a convex closed end facing the sealing portion (26) on the outlet side of the cell (23).

2. The honeycomb filter (20) according to Claim 1, wherein the sealing portion (26) on the outlet side of the cell (23) has a convex end facing the trapping layer (24).

3. The honeycomb filter (20) according to claim 1 or claim 2, wherein the void (25) is larger on the partition portion side than on the center side of the cell (23).

4. The honeycomb filter (20) according to any one of Claims 1 to 3, wherein the void (25) has a void length L of 0.5 mm or more and 6.0 mm or less as viewed in a cross section in the same direction as the flow path at the outlet end of the cell (23), the void length L being the length between a contact position between the trapping layer (24) and the partition portion (22) and a contact position between the sealing portion (26) and the partition portion (22).

5. The honeycomb filter (20) according to any one of Claims 1 to 4, wherein the trapping layer (24) has a higher thickness at the center of the cell (23) at an outlet end of the cell (23).

6. The honeycomb filter (20) according to any one of Claims 1 to 5, wherein the trapping layer (24) has a center thickness A of 4 mm or more and 30 mm or less as viewed in a cross section in the same direction as the flow path at the center of the cell (23) at the outlet end of the cell (23).

7. The honeycomb filter (20) according to any one of Claims 1 to 6, wherein the ratio A/B of a center thickness A to a 1/4-distance thickness B is 1.1 or more and 1.8 or less, wherein the center thickness A is the thickness of the trapping layer (24) as viewed in a cross section in the same direction as the flow path at the center of the cell (23) at the outlet end of the cell (23), and the 1/4-distance thickness B is the thickness of the trapping layer (24) in the longitudinal direction at a position spaced away from a surface of the partition portion (22) by one fourth of the distance between the surface of the partition portion (22) and a surface of an opposing partition portion (22).

8. The honeycomb filter (20) according to any one of Claims 1 to 7, wherein a portion of the trapping layer (24) in contact with the partition portion (22) in a downstream region of the cell (23) has a thickness t of 0.3 mm or more and 1.0 mm or less.

9. The honeycomb filter (20) according to any one of Claims 1 to 8, further comprising a catalyst.

## Patentansprüche

1. Wabenfilter (20) zum Einfangen von festen Bestandteilen, die in einem Fluid enthalten sind, umfassend:
eine Vielzahl von porösen Trennabschnitten (22), die jeweils eine als ein Strömungspfad des Fluids dienende Zelle (23) bilden;
einen Dichtungsabschnitt (26) zum Abdichten eines Endes der Zelle (23);
eine Einfangschicht (24) zum Einfangen von festen Bestandteilen, die im Fluid enthalten sind, wobei die Einfangschicht (24) auf jedem der Trennabschnitte (22) angeordnet ist; und
einen Hohlraum (25) zwischen dem Dichtungsabschnitt (26) auf einer Auslassseite der Zelle (23) und der Einfangschicht (24);
worin die Einfangschicht (24) ein konvexes geschlossenes Ende aufweist, das dem Dichtungsabschnitt (26) auf der Auslassseite der Zelle (23) zugewandt ist.

2. Wabenfilter (20) gemäß Anspruch 1, worin der Dichtungsabschnitt (26) auf der Auslassseite der Zelle (23) ein konvexes Ende aufweist, das der Einfangschicht (24) zugewandt ist.

3. Wabenfilter (20) gemäß Anspruch 1 oder Anspruch 2, worin der Hohlraum (25) größer auf der Trennabschnittsseite als auf der Mittenseite der Zelle (23) ist.

4. Wabenfilter (20) gemäß einem der Ansprüche 1 bis 3, worin der Hohlraum (25) eine Hohlraumlänge L von 0,5 mm oder mehr und 6,0 mm oder weniger bei Betrachtung in einem Querschnitt in dieselbe Richtung wie der Strömungspfad am Auslassende der Zelle (23) aufweist, wobei die Hohlraumlänge L die Länge zwischen einer Kontaktstelle zwischen der Einfangschicht (24) und dem Trennabschnitt (22), und einer Kontaktstelle zwischen dem Dichtungsabschnitt (26) und dem Trennabschnitt (22) ist.

5. Wabenfilter (20) gemäß einem der Ansprüche 1 bis 4, worin die Einfangschicht (24) eine höhere Dicke in der Mitte der Zelle (23) an einem Auslassende der Zelle (23) aufweist.

6. Wabenfilter (20) gemäß einem der Ansprüche 1 bis 5, worin die Einfangschicht (24) eine Mittendicke A von 4 mm oder mehr und 30 mm oder weniger bei Betrachtung in einem Querschnitt in dieselbe Richtung wie der Strömungspfad in der Mitte der Zelle (23) am Auslassende der Zelle (23) aufweist.

7. Wabenfilter (20) gemäß einem der Ansprüche 1 bis 6, worin das Verhältnis A/B einer Mittendicke A zu einer ¼-Abstandsdicke B 1,1 oder mehr und 1,8 oder weniger ist, worin die Mittendicke A die Dicke der Einfangschicht (24) bei Betrachtung in einem Querschnitt in dieselbe Richtung wie der Strömungspfad in der Mitte der Zelle (23) am Auslassende der Zelle (23) ist, und die ¼-Abstandsdicke B die Dicke der Einfangschicht (24) in die Längsrichtung an einer Stelle ist, die von einer Oberfläche des Trennabstands (22) um ein Viertel des Abstands zwischen der Oberfläche des Trennabstands (22) und einer Oberfläche eines gegenüberliegenden Trennabschnitts (22) beabstandet angeordnet ist.

8. Wabenfilter (20) gemäß einem der Ansprüche 1 bis 7, worin ein Abschnitt der Einfangschicht (24), der in Kontakt mit dem Trennabschnitt (22) in einer stromabwärtigen Region der Zelle (23) ist, eine Dicke t von 0,3 mm oder mehr und 1,0 mm oder weniger aufweist.

9. Wabenfilter (20) gemäß einem der Ansprüche 1 bis 8, ferner umfassend einen Katalysator.

## Revendications

1. Filtre en nids d'abeilles (20) destiné à piéger des composants solides contenus dans un fluide, comprenant :
une pluralité de parties de séparation poreuses (22) formant chacune une cellule (23) qui sert de trajet d'écoulement du fluide ;
une partie d'étanchéité (26) destinée à fermer une extrémité de la cellule (23) ;
une couche de piégeage (24) destinée à piéger les composants solides contenus dans le fluide, la couche de piégeage (24) étant disposée sur chacune des parties de séparation (22) ; et
un vide (25) entre la partie d'étanchéité (26) sur un côté d'évacuation de la cellule (23) et la couche de piégeage (24) ;
dans lequel la couche de piégeage (24) possède une extrémité fermée convexe tournée vers la partie d'étanchéité (26) sur le côté d'évacuation de la cellule (23).

2. Filtre en nids d'abeilles (20) selon la revendication 1, dans lequel la partie d'étanchéité (26) sur le côté d'évacuation de la cellule (23) possède une extrémité convexe tournée vers la couche de piégeage (24).

3. Filtre en nids d'abeilles (20) selon la revendication 1 ou 2, dans lequel le vide (25) est plus grand côté partie de séparation que sur le côté central de la cellule (23).

4. Filtre en nids d'abeilles (20) selon l'une quelconque des revendications 1 à 3, dans lequel le vide (25) possède une longueur de vide L de 0,5 mm ou plus et de 6 mm ou moins sur une vue en coupe dans la même direction que le trajet d'écoulement de l'extrémité d'évacuation de la cellule (23), la longueur de vide L étant la longueur entre une position de contact entre la couche de piégeage (24) et la partie de séparation (22) et une position de contact entre la partie d'étanchéité (26) et la partie de séparation (22).

5. Filtre en nids d'abeilles (20) selon l'une quelconque des revendications 1 à 4, dans lequel la couche de piégeage (24) possède une épaisseur plus importante au centre de la cellule (23) au niveau d'une extrémité d'évacuation de la cellule (23).

6. Filtre en nids d'abeilles (20) selon l'une quelconque des revendications 1 à 5, dans lequel la couche de piégeage (24) possède une épaisseur centrale A de 4 mm ou plus et de 30 mm ou moins sur une vue en coupe dans la même direction que le trajet d'écoulement au centre de la cellule (23) au niveau de l'extrémité d'évacuation de la cellule (23).

7. Filtre en nids d'abeilles (20) selon l'une quelconque des revendications 1 à 6, dans lequel le rapport A/B entre une épaisseur centrale A et une épaisseur à ¼ de distance B est de 1,1 ou plus et de 1,8 ou moins, dans lequel l'épaisseur centrale A correspond à l'épaisseur de la couche de piégeage (24) vue en coupe dans la même direction que le trajet d'écoulement au centre de la cellule (23) au niveau de l'extrémité d'évacuation de la cellule (23), et l'épaisseur à ¼ de distance B correspond à l'épaisseur de la couche de piégeage (24) dans la direction longitudinale à un emplacement espacé d'une surface de la partie de séparation (22) selon un quart de la distance entre la surface de la partie de séparation (22) et une surface d'une partie de séparation opposée (22).

8. Filtre en nids d'abeilles (20) selon l'une quelconque des revendications 1 à 7, dans lequel une partie de la couche de piégeage (24) en contact avec la partie de séparation (22) dans une zone aval de la cellule (23) possède une épaisseur t de 0,3 mm ou plus et de 1 mm ou moins.

9. Filtre en nids d'abeilles (20) selon l'une quelconque des revendications 1 à 8, comprenant en outre un catalyseur.
